# EUROPEAN PATENT SPECIFICATION

(11) **EP 2 592 885 B1**
(45) Date of publication and mention of the grant of the patent: **04.05.2016**
(21) Application number: 10854338.0
(22) Date of filing: 20.10.2010
(51) Int. Cl.: H04W 64/00, H04W 4/02, G01S 19/09, G01S 19/14, G01S 19/42, G06Q 30/02, H04W 4/20, G06F 17/30

(54) **SYSTEM AND METHOD FOR ACQUIRING STATISTICS OF NAVIGATION INFORMATION**
SYSTEM UND VERFAHREN ZUM ERHALTEN VON STATISTIKEN AUS NAVIGATIONSINFORMATIONEN
SYSTÈME ET PROCÉDÉ D'ACQUISITION DE STATISTIQUES D'INFORMATIONS DE NAVIGATION

(30) Priority: 09.07.2010 CN 201010225137
(43) Date of publication of application: 15.05.2013
(73) Proprietor: ZTE Corporation, Shenzhen, Guangdong 518057 (CN)
(72) Inventor: LIU, Jia, Shenzhen Guangdong 518057 (CN); WANG, Haowen, Shenzhen Guangdong 518057 (CN); ZHANG, Zhiping, Shenzhen Guangdong 518057 (CN)
(74) Representative: Pronovem
(86) International application number: PCT/CN2010/077910
(87) International publication number: WO 2012/003679

(56) References cited:
- CN-A- 1 315 122
- CN-A- 101 557 582
- US-A1- 2007 096 900
- US-A1- 2008 248 814
- US-A1- 2010 004 997
- US-A1- 2010 076 968

## Description

### Field of the Invention

The present invention relates to the communication field, and in particular, to systems and methods for statistics of navigation information.

### Background of the Invention

At present, people would like to find from the Internet the recommendation information about various stores, especially about food and entertainment. For example, the websites such as www.52ch.net and www.dianping.com provide various types of consumer information, determine the visitation data of the stores, compile various evaluations, and publish portal websites of the best stores on a monthly or yearly basis. Such information compilation requires the consumers to register on the portal website before they can recommend, evaluate, etc. the stores. However, most people prefer only looking up consumer information, but not providing comments or reviews. Moreover, there are a lot of "sock puppets" on the portal websites, thus the visitation data and evaluations compiled from portal websites are not always fair or timely.

Thus, conventionally the navigation information (i.e. statistical data reflecting the popularity visitation numbers of popular locations, such as visitation volume, recommendation values, and/or rankings of the locations) is determined completely based upon the information collected from the portal websites. This cannot meet the real-time requirement, and the information is not always fair. In addition, the more and more diversified requirements of the consumers to the navigation information cannot be satisfied. Therefore, how to improve the determination of the visitation volume of the popular locations so as to obtain fair and real-time navigation information to be searched by the mobile communication terminal users is an urgent problem to be solved.

US2010/0004997 discloses a system and method for generating a user profile based on periodic location fixes.

### Summary of the Invention

As to the problem in the prior art that the real-time requirement cannot be satisfied and the navigation information is not always fair since conventionally the navigation information is determined completely based upon the information collected on the portal websites, methods and systems for statistics of navigation information are provided in the present invention to solve at least one of the above problems.

A system for statistics of navigation information is provided according to one aspect of the present invention.

The system for statistics of navigation information according to the present invention comprises: a mobile terminal module configured to send regularly location data thereof and time information corresponding to the location data to a location-based service module; the location-based service module configured to obtain the navigation information based on statistics of the location data and corresponding time information thereof; a position service module configured to receive regularly positioning requests from the mobile terminal module to position the mobile terminal module, and to send positioning results obtained upon operation to the mobile terminal module; and the mobile terminal module is further configured to process the positioning results to obtain location data.

Further, the mobile terminal module comprises: a GPS module configured to send regularly the positioning requests to the position service module and to receive the positioning results returned from the position service module; and a GPS switching module configured to control on and off of the GPS module.

And further, the mobile terminal module comprises: a storage module configured to store the location data and corresponding time information thereto; and a delete module configured to delete the location data and corresponding time information thereof when the location-based service module initiates a notification of having received the location data and corresponding time information thereof.

And further, the location-based service module comprises: a mapping module configured to match in real-time collected location data with geographic information to determine popular locations; a statistics module configured to perform statistics of visitation numbers of the popular locations in a temporal order, respectively; and a notification module configured to send notification to the mobile terminal module when having received the location data and corresponding time information thereof.

A system for statistics of navigation information is provided according to another aspect of the present invention.

The system for statistics of navigation information according to the present invention comprises: a mobile terminal module configured to determine popular locations corresponding to location data thereof and visitation numbers of the popular locations, and to report regularly the acquired popular locations and visitation numbers thereof to a network service providing module; the network service providing module configured to perform statistics of information of the popular locations and visitation numbers thereof reported from the mobile terminal module to obtain the navigation information; a position service module configured to receive regularly positioning requests from the mobile terminal module to position the mobile terminal module, and to send positioning results obtained upon operation to the mobile terminal module; and the mobile terminal module is further configured to process the positioning results to obtain the location data.

And further, the mobile terminal module comprises: a GPS module configured to send regularly the positioning requests to the position service module and to receive the positioning results returned from the positioning server; and a GPS switching module configured to control on and off of the GPS module.

And further, the mobile terminal module comprises: a location-based service resource data module configured to store the location data and corresponding time information thereof; and a delete module configured to delete regularly the location data and corresponding time information thereof.

And further, the mobile terminal module comprises: a mapping module configured to match in real-time collected location data with geographic information to determine the popular locations; and a statistics module configured to perform statistics of visitation numbers of the popular locations in a temporal order, respectively.

A method for statistics of navigation information is provided according to still another aspect of the present invention.

The method for statistics of the navigation information according to the present invention comprising: determining regularly location data of a mobile terminal and time information corresponding to the location data; and determine the navigation information based on statistics of the location data and corresponding time information thereof

Further, determining regularly the location data of the mobile terminal and the time information corresponding to the location data comprising: the mobile terminal sending regularly positioning requests to a positioning server; the positioning server positioning the mobile terminal and sending positioning results obtained upon operation to the mobile terminal; and the mobile terminal processing the positioning results to obtain the location data and reporting the same to a location-based server.

And further, determine the navigation information based on statistics of the location data and corresponding time information thereof comprising: the location-based server matching in real-time collected location data with geographic information to determine popular locations; the location-based server performing statistics of visitation numbers of the popular locations in a temporal order, respectively; and the location-based server performing statistics of the navigation information based on the popular locations and the visitation numbers thereof

And further, the location-based server performing statistics of the visitation numbers of the popular locations, respectively, comprising: the location-based server determining whether the mobile terminal stays at the popular locations longer than a threshold assigned to a type of locations including the popular locations; if yes, the location-based server adding 1 to the visitation numbers of the popular locations.

And further, determine the navigation information based on statistics of the location data and corresponding time information thereof comprising: the mobile terminal matching in real-time the collected location data with geographic information to determine the popular locations; the mobile terminal performing statistics of visitation numbers of the popular locations in a temporal order, respectively; and the mobile terminal reporting regularly the popular locations and the visitation numbers thereof to a network service providing platform to enable the network service providing platform to determine the information reported from respective mobile terminals to obtain the navigation information.

And further, the mobile terminal performing statistics of the visitation numbers of the popular locations, respectively, comprising: the mobile terminal determining whether the mobile terminal stays at the popular locations longer than a threshold assigned to a type of locations including the popular locations; if yes, the mobile terminal adding 1 to the visitation numbers of the popular locations.

By the present invention, a positioning system is used to position a mobile terminal, and location data and corresponding time information thereof are determined to obtain navigation information, which solves the problem in the related art that the real-time requirement cannot be satisfied and calculating values are not always fair since conventionally the navigation information is determined completely based upon information collected on portal websites, and further, visitation numbers of popular locations may be updated in real-time, and such determination methodology is quite fair and reliable, does not have false content, and can provide quite precise navigation information to mobile communication terminal users.

### Brief Description of the Drawings

The drawings illustrated here provide a further understanding of the present invention and form a part of the present application. The exemplary embodiments and the description thereof are used to explain the present invention without unduly limiting the scope of the present invention, wherein:
Fig. 1 is a structure block diagram of a first system for statistics according to an embodiment in the present invention;
Fig. 2 is a structure block diagram of a mobile terminal in the first system for statistics according to a preferred embodiment in the present invention;
Fig. 3 is a structure block diagram of a position server in the first or a second system for statistics according to a preferred embodiment in the present invention;
Fig. 4 is a structure block diagram of a location-based service module in the first system for statistics according to a preferred embodiment in the present invention;
Fig. 5 is a structure block diagram of the first system for statistics according to a preferred embodiment in the present invention;
Fig. 6 is a structure block diagram of the second system for statistics according to an embodiment in the present invention;
Fig. 7 is a structure block diagram of a mobile terminal in the second system for statistics according to a preferred embodiment in the present invention;
Fig. 8 is a structure block diagram of the second system for statistics according to a preferred embodiment in the present invention;
Fig. 9 is a flow chart of a first method for statistics of navigation information according to an embodiment in the present invention;
Fig. 10 is a flow chart of the first method for statistics of navigation information according to a preferred embodiment in the present invention;
Fig. 11 is a flow chart of performing statistics by an LBS server (location-based server) according to a preferred embodiment in the present invention;
Fig. 12 is a flow chart of a second method for statistics of navigation information according to a preferred embodiment in the present invention; and
Fig. 13 is a flow chart of performing statistics by a mobile terminal according to a preferred embodiment in the present invention.

### Detailed Description of Embodiments

Next, the present invention will be illustrated in detail with reference to the accompanying drawings in conjunction with embodiments. It should be indicated that the embodiments and features therein in the present application can be combined with each other if they are not conflicted.

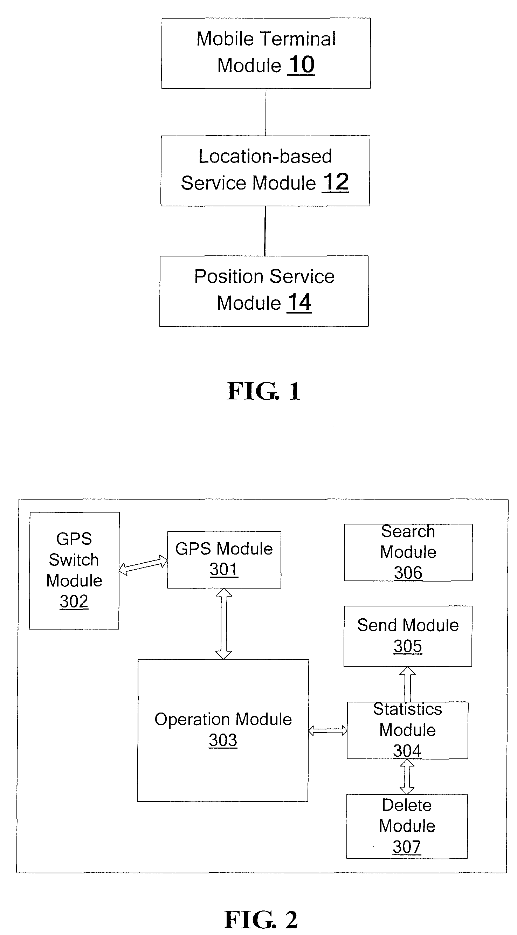

Fig. 1 is a structure block diagram of a first system for statistics according to an embodiment in the present invention. As shown in Fig. 1, a first system for statistics according to an embodiment in the present invention comprises a mobile terminal module 10 and a location-based service module 12.

The mobile terminal module 10 is configured to send regularly location data thereof and time information corresponding to the location data to the location-based service module.

Particularly, the location data include but not limited to longitude and latitude coordinate location information.

The location-based service module 12 is configured to obtain the navigation information based on statistics of the location data and corresponding time information thereof.

In related art, the navigation information (i.e. statistical data reflecting the popularity of popular locations, such as visitation volume, recommendation values, and/or rankings of the locations) is obtained completely based upon information collected on the portal websites. This cannot meet the real-time requirement, and the navigation information is not always fair; in addition, the more and more diversified requirements of the consumers to the navigation information cannot be satisfied. The navigation information obtained using the system provided in the above embodiment for obtaining navigation information is fair and reliable, does not have false content, and can provide quite precise navigation information to the mobile terminal users.

Particularly, the mobile terminal module may be a mobile terminal entity, and also may be one module provided on the mobile terminal; and the location-based service module may be an LBS server (location-based server) and also may be one module provided on the LBS server.

Preferably, the system may further comprise: a position service module 14 configured to receive regularly positioning requests of the mobile terminal module to position the mobile terminal module, and to send positioning results obtained upon operation to the mobile terminal module; and then the mobile terminal module is further configured to process the positioning results to obtain the location data.

By the processing of the position service module 14, the mobile terminal may be effectively positioned, and the location information of the mobile terminal is precisely obtained, so that the navigation information obtained is enabled to be precise and reliable.

Particularly, the positioning result includes but not limited to cellular Cell-ID, longitude and latitude coordinate data, etc.

Preferably, as shown in Fig. 2, the mobile terminal module 10 may comprise: a GPS module 301 configured to send regularly the positioning request to the position service module and to receive the positioning result returned from the position service module; and a GPS switch module 302 configured to control on and off of the GPS module.

Apart from the automatic determination of the visitation numbers, and fairness and convenience of the searching result, the privacy problem of the mobile terminal communication users and the problem of endurance capabilities of the mobile terminals also should be taken into consideration in the navigation method of performing statistics of the visitation number of a certain location based on the A-GPS positioning system. Therefore, it is quite necessary to add a GPS function switch.

The GPS switching module refers to a switch set by a mobile communication terminal user for switching on the GPS function or not. Since frequent positioning will affect the endurance capability of a mobile terminal, and will cause privacy leakage of the mobile communication terminal user, a default setting of the GPS function switch is recommended to be "off". The GPS function switch is switched on initiatively when the mobile communication terminal user has a requirement in an aspect of location-based service.

Preferably, as shown in Fig. 2, the mobile terminal module 10 may comprise: a storage module 308 configured to store the location data and corresponding time information thereof; and a delete module 307 configured to delete the location data and corresponding time information thereof when the location-based service module initiates a notification of having received the location data and corresponding time information thereof.

In view of occupancy of mobile terminal system resources by endless positioning service and performing statistics, various types of positioning data and statistics results stored on the mobile terminal will be deleted once the statistics result is fed back to the LBS server.

The delete module refers to a method of the mobile terminal autonomously deleting various types of positioning data and statistics results after the mobile terminal receives a notification that a statistics result 1 returned from the LBS server has been received. The advantage of this method is that a part of the system resources can be regularly released.

Next, a preferred embodiment as mentioned above will be described in conjunction with Fig. 2.

Fig. 2 is a structure block diagram of a mobile terminal in the first system for statistics according to a preferred embodiment in the present invention. As shown in Fig. 2, the mobile terminal may further comprise the following modules:
a GPS module 301 that sends the positioning request to the positioning server and receives the positioning result fed back from the positioning server;
a GPS switch module 302 that is a switch autonomously operated by the mobile communication terminal user for controlling whether to turn on a GPS function or not;
an operation module 303 that is a module which may make a cellular Cell-ID further precise to be longitude and latitude coordinates using an existing positioning technology, wherein the longitude and latitude coordinates are not necessarily a base station location of a cell corresponding to the Cell-ID, and may be further precise to be a location of the mobile terminal;
a statistics module 304 (which includes therein the storage module 308 above) that is configured to perform statistics positioning results (longitude and latitude coordinate data) and corresponding time thereof, and to store the statistics results in a form of table, as specific examples seen in Table 1:

**Table 1**

| | Longitude and Latitude Coordinates | Time |
|---|---|---|
| 1 | (*, *) | 09:00 |
| 2 | (*, *) | 09:05 |
| 3 | (*, *) | 09:10 |
| 4 | ...... | ...... |

a send module 305 that sends the positioning results and corresponding time thereof stored in the form of Table 1 to an LBS server 200.
a search module 306 that is connected to the network, in a manner such as GPRS, 3G, to search for popular location information, including but not limited to popular location visitation numbers determination values, recommendation values/ranking of popular type locations, etc., in which the mobile communication terminal users are interested;
a delete module 307 that deletes autonomously various types of positioning data and statistics results stored on the mobile terminal after having received a notification that the positioning results returned from the LBS server 200 have been received.

Particularly, the position service module may be a positioning server entity.

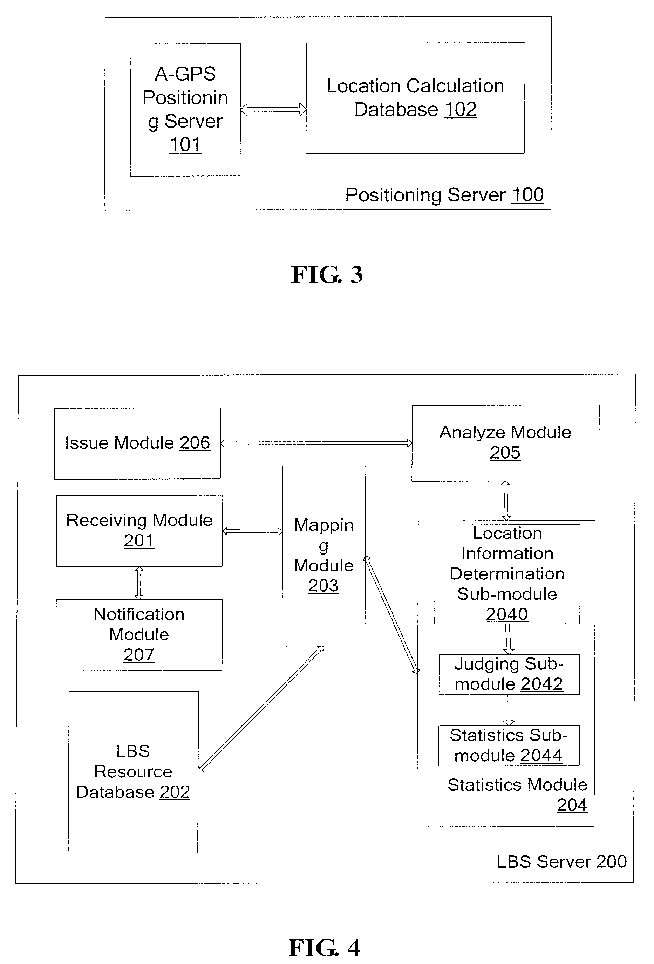

Preferably, as shown in Fig. 3, the position service module may further comprise: an A-GPS positioning server 101 that receives the positioning request from the mobile communication terminal user and returns corresponding positioning result; and a location calculation database 102 that operates and obtains current location information of the mobile terminal using an A-GPS general positioning technology, and feeds back an operating result to the A-GPS positioning server 101.

Preferably, the location-based service module 14 may further comprise: a mapping module 203 configured to match in real-time collected location data with geographic information to determine popular locations; a statistics module 204 configured to perform statistics of visitation numbers of the popular locations in a temporal order, respectively; and a notification module 207 configured to send notification to the mobile terminal module when having received the location data and corresponding time information thereof.

Particularly, the mapping above refers to matching the positioning data fed back from the mobile terminal with an electronic map and/or a thematic map in an LBS resource database.

Particularly, the geographic information above may be an electronic map provided by an LBS service provider, stored in the LBS resource database and dedicated to navigation to display various types of location information in which the users are interested, and specifically, such electronic map further may be divided into various types of "thematic maps" according to location information of various types. Of course, the electronic map will be updated regularly.

Next, the preferred embodiment as mentioned above will be described in conjunction with Fig. 4.

Fig. 4 is a structure block diagram of a location-based service module in the first system for statistics according to a preferred embodiment in the present invention. As shown in Fig. 4, the location-based service module may further comprise the following modules:
a receiving module 201 that receives a statistics result related to the location information (i.e. the location data above) and fed back from the mobile terminal.
an LBS resource database 202 that stores various types of resource data, such as electronic map and/or thematic map, determining and analyzing data, and navigation information issued to the network, related to the location information and navigation information;
a mapping module 203 that matches (also maybe called "map") the positioning data fed back from the mobile terminal with the electronic map and/or thematic map in the LBS resource database 202; and
a statistics module 204 that performs statistics of location information meeting triggering conditions in a temporal order, respectively, according to different triggering conditions (i.e. thresholds assigned to particular types of the popular locations) corresponding to different types of location information.

Particularly, different types of locations are assigned different triggering conditions, respectively. For instance, a triggering condition of a restaurant type location may be set to be 30 or 60 minutes; a triggering condition of a small shopping consumption type location may be set to be 10 or 15 minutes, while a triggering condition of a large shopping consumption type location may be set to be 1, 2 or 3 hours, etc. The above conditions of course are merely examples, and various types of triggering conditions may be set according to empirical values.

In a preferred implementation process, the statistics module 204 may further comprise: a location information determination sub-module 2040, a judging sub-module 2042 and a statistics sub-module 2044.

The location information determination sub-module 2040 is configured to mate up the longitude and latitude coordinates matched on the electronic map and/or thematic map with information of the popular locations on the map for determination, wherein the longitude and latitude coordinate data falling into the popular location range are determined as this popular location. The longitude and latitude coordinates, popular locations and corresponding time thereof are stored in a form of table, as specific examples seen in Table 2.

**Table 2**

| | Popular Locations | Longitude and Latitude Coordinates | Time |
|---|---|---|---|
| 1 | Location 1 | (*, *) | 09:00 |
| 2 | Location 1 | (*, *) | 09:05 |
| 3 | Location 2 | (*, *) | 09:10 |
| 4 | ...... | ...... | ...... |

The judging sub-module 2042 determines whether a time range from start to end of a mobile terminal in a certain popular location meets a triggering condition in a temporal order.

The statistics sub-module 2044 is configured to add 1 to information of a popular location that meets a triggering condition.

In a preferred implementation process, the judging sub-module 2042 makes a determination in a manner as follow.

According to a location type of a popular location corresponding to a first time point, a popular location corresponding to a next time point is determined whether it is the same popular location; if yes, following popular locations are determined in turn in a temporal order until they are not the same popular location. At this time, a time range from start to end of the mobile terminal in this popular location is determined whether it meets a corresponding triggering condition, if yes, the statistics sub-module 2044 will add 1 to a visitation number of this popular location; and if they are not the same popular location, a new determination is restarted according to a location type of a current popular location.

In a preferred implementation process, the determination manner described above may further includes: the judging sub-module 2042 firstly determining in a temporal order whether a popular location corresponding to a first time point in a present time period and a popular location corresponding to a last time point in a former time period are identical or not; if yes, a start time of this popular location is modified to be a start time determined in the former time period; and if not, a new determination is restarted.

An analyze module 205 analyzes the visitation numbers of the popular locations determined and obtained to obtain recommendation values/ranking of locations of one popular type.

An issue module 206 issues navigation information such as popular location visitation numbers and recommendation values/ranking of the popular type locations obtained upon a determination and analysis to the network to be searched by the mobile communication terminal users and other users.

A notification module 207 sends notification to the mobile terminal module when having received the location data and corresponding time information thereof.

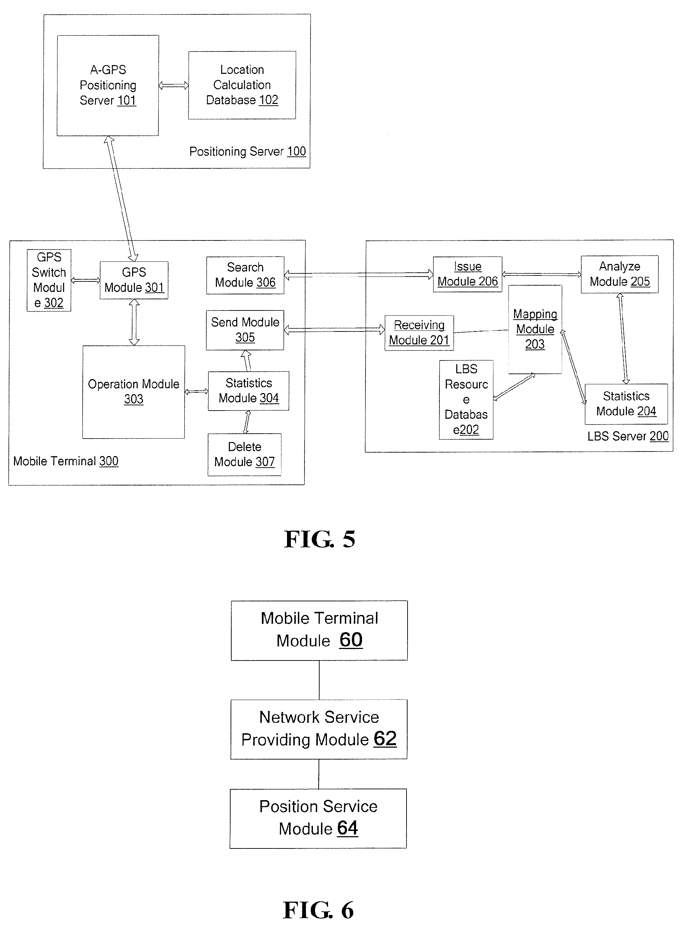

Next, the preferred embodiment as mentioned above will be described in conjunction with Fig. 5.

Fig. 5 is a structure block diagram of the first system for statistics according to a preferred embodiment in the present invention. As shown in Fig. 5, the first system for statistics according to a preferred embodiment in the present invention comprises: a positioning server 100, a mobile terminal 300, and an LBS server 200, wherein a GPS module of the mobile terminal 300 exchanges information with an A-GPS positioning server 101 of the positioning server 100, a search module 306 of the mobile terminal 300 may exchange information with an issue module of the LBS server 200, and a send module 305 of the mobile terminal 300 may exchange information with a receiving module 201 of the LBS server 200. See descriptions to Fig. 1 to Fig. 4 for working modes of the above modules combining with each other, and unnecessary details will not be given herein.

Fig. 6 is a structure block diagram of a second system for statistics according to an embodiment in the present invention. As shown in Fig. 6, the second system for statistics comprises: a mobile terminal module 60 and a network service provider module 62.

The mobile terminal module 60 is configured to determine a popular location corresponding location data thereof and a visitation number of the popular location, and to report regularly obtained popular locations and visitation number thereof to the network service provider module.

Particularly, the location data include but not limited to longitude and latitude coordinate location information.

The network service provider module 62 is configured to perform statistics of information of the popular locations and the visitation numbers thereof reported by the mobile terminal module to obtain the navigation information.

The navigation information obtained using the system provided in the above embodiment for obtaining the navigation information is fair and reliable, does not have false content, and can provide quite precise navigation information to the mobile terminal users.

Particularly, the mobile terminal module may be a mobile terminal entity, and also may be one module provided on the mobile terminal; and the network service provider module may be a network service provider (such as www.dianping.com).

Preferably, the system may further comprise: a position service module 64 configured to receive regularly positioning requests from the mobile terminal module to position the mobile terminal module, and to send positioning results obtained upon operation to the mobile terminal module; and the mobile terminal module 60 is further configured to process the positioning results to obtain the location data.

Preferably, as shown in Fig. 3, the position service module 64 has a structure identical with the position service module 14, and may further comprise: an A-GPS positioning server 101 that receives positioning requests from a mobile communication terminal user, and returns corresponding positioning results; and a location calculation database 102 that operates and obtains current location information of the mobile terminal using an A-GPS general positioning technology and feeds back an operating result to the A-GPS positioning server 101.

Particularly, the positioning result includes but not limited to cellular Cell-ID, longitude and latitude coordinate data, etc.

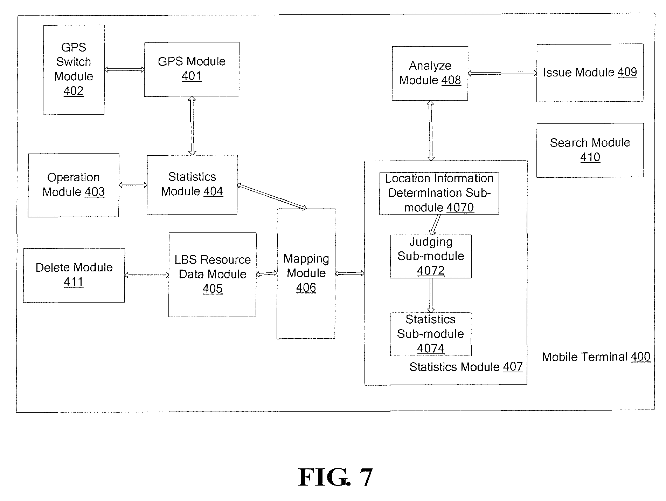

Preferably, as shown in Fig. 7, the mobile terminal module 60 may comprise: a GPS module 401 configured to send regularly the positioning request to the position service module, and to receive the positioning result returned from the positioning server; and a GPS switching module 402 configured to control on and off of the GPS module.

Preferably, as shown in Fig. 7, the mobile terminal module 60 may comprise: a location-based service (LBS) resource data module 405 configured to store the location data and corresponding time information thereof; and a delete module 411 configured to delete regularly the location data and corresponding time information thereof.

Preferably, as shown in Fig. 7, the mobile terminal module 60 may comprise: a mapping module 406 configured to match in real-time collected location data with geographic information so as to determine popular locations; and a statistics module 407 configured to perform statistics of visitation numbers of popular locations in a temporal order, respectively.

Particularly, the mapping above refers to matching the positioning data fed back from the mobile terminal with an electronic map and/or a thematic map in the LBS resource data module 405.

Particularly, the geographic information above may be an electronic map stored in the LBS resource data module 405 in the mobile terminal and dedicated to navigation to display various types of location information in which the users are interested, and specifically, such electronic map further may be divided into various types of "thematic maps" according to location information of various types. Of course, the electronic map will be updated regularly.

Next, the preferred embodiment as mentioned above will be described in conjunction with Fig. 7.

Fig. 7 is a structure block diagram of a mobile terminal in a second system for statistics according to a preferred embodiment in the present invention. As shown in Fig. 7, the mobile terminal in the second system for statistics may further comprise the following modules.

The GPS module 401 sends positioning requests to a positioning server and receives positioning results fed back.

The GPS module switch 402 is a switch autonomously operated by a mobile communication terminal user for controlling whether to turn on a GPS function.

The operation module 403 refers to a module which may make a cellular Cell-ID further precise to be longitude and latitude coordinates using an existing positioning technology, wherein the longitude and latitude coordinates are not necessarily a base station location of a cell corresponding to the Cell-ID, and may be further precise to be a location of the mobile terminal.

The statistics module 404 (which includes the storage module 412 above) is configured to perform statistics of positioning results (longitude and latitude coordinate data) and corresponding time thereof, and to store the statistics results in a form of table, as specific examples seen in Table 1.

The LBS resource data module 405 stores various types of resource data, such as electronic map and/or thematic map, determining and analyzing data, and navigation information issued to the network, related to the location information and navigation information, and all the various types of resource data above are stored in a T-Flash card.

The mapping module 406 matches the positioning data with the electronic map and/or thematic map in the LBS resource data module 405.

The statistics module 407 regularly performs statistics of location information meeting triggering conditions in a temporal order, respectively, according to different triggering conditions (i.e., thresholds corresponding to types of the popular locations) corresponding to different types of location information.

Preferably, the statistics module 407 may further comprise a location information determination sub-module 4070, a judging sub-module 4072 and a statistics sub-module 4074.

The location information determination sub-module 4070 is configured to match up the longitude and latitude coordinates found on the electronic map and/or thematic map with information of the popular locations on the map for determination, wherein the longitude and latitude coordinate data falling into the popular location range are determined as this popular location. The longitude and latitude coordinates, popular locations and corresponding time thereof are stored in a form of table, as specific examples seen in Table 2.

The judging sub-module 4072 determines whether a time range from start to end of a mobile terminal in a certain popular location meets a triggering condition in a temporal order.

The statistics sub-module 4074 is configured to add 1 to information of a popular location that meets a triggering condition.

In a preferred implementation process, the judging sub-module 4072 makes a determination in a manner as follow: according to a location type of a popular location corresponding to a first time point, a popular location corresponding to a next time point is determined whether it is the same popular location; if yes, following popular locations are determined in turn in a temporal order until they are not the same popular location. At this time, a time range from start to end of the mobile terminal in this popular location is determined whether it meets a corresponding triggering condition, if yes, the statistics sub-module 4074 will add 1 to a visitation number of this popular location; and if they are not the same popular location, a new determination is restarted according to a location type of a current popular location.

In a preferred implementation process, the determination manner above may further include: the judging sub-module 4072 firstly determining in a temporal order whether a popular location corresponding to a first time point in a present time period and a popular location corresponding to a last time point in a former time period are identical or not; if yes, a start time of this popular location is modified to be a start time determined in the former time period; and if not, a new determination is restarted.

The analyze module 408 analyzes the visitation numbers of the popular locations determined and obtained to obtain recommendation values/ranking of locations of one popular type.

The issue module 409 issues navigation information, such as popular location visitation numbers and recommendation values/ranking of the popular type locations, obtained upon a calculation and analysis to the network to be searched by the mobile communication terminal users.

The search module 410 is connected to the network, in a manner such as GPRS, 3G, to search for popular location information, including but not limited to popular location visitation number statistics values, recommendation values/ranking of popular type locations, etc., in which the mobile communication terminal users are interested.

The delete module 411, the mobile terminal autonomously eliminates regularly various types of positioning data and statistics results in the LBS resource data module 405.

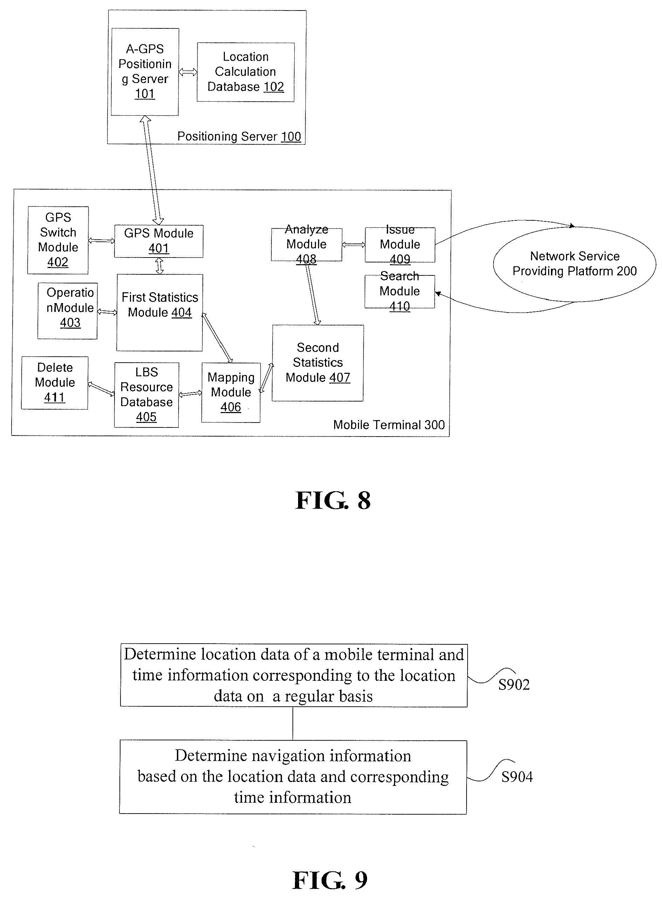

Next, the preferred embodiment as mentioned above will be described in conjunction with Fig. 8.

Fig. 8 is a structure block diagram of a second system for statistics according to a preferred embodiment in the present invention. As shown in Fig. 8, the second system for statistics according to a preferred embodiment in the present invention comprises: a positioning server 100, a mobile terminal 300, and a network service providing platform 200, wherein, a GPS module 401 of the mobile terminal 300 exchanges information with an A-GPS positioning server 101 of the positioning server 100, and a search module 410 and an issue module 409 of the mobile terminal 300 exchange information with the network service providing platform 200, respectively. See descriptions to Fig. 5 to Fig. 7 for working modes of the above modules combining with each other, and unnecessary details will not be given herein.

Fig. 9 is a flow chart of a method for statistics of navigation information according to an embodiment in the present invention. As shown in Fig. 9, a method for statistics of the navigation information may include the following processes:
step S902: determining regularly location data of a mobile terminal and time information corresponding to the location data; and
step S904: determining the navigation information based on statistics of the location data and corresponding time information thereof.

The navigation information obtained using the method provided in the above embodiment for obtaining the navigation information is fair and reliable, does not have false content, and can provide quite precise navigation information to the mobile communication terminal users, since the location data of the mobile terminal are determined regularly.

There are mainly the following two preferred embodiments as to the method for obtaining the navigation information.

Firstly, a first embodiment is described.

Preferably, step S902 above may further include the following processes:
(1) a mobile terminal sends regularly positioning requests to a positioning server;
(2) the positioning server positions the mobile terminal and sends positioning results obtained upon operation to the mobile terminal; and
(3) the mobile terminal processes the positioning result to obtain the location data and reports the same to the location-based server.

Preferably, step S904 above may further include the following processes:
(1) the location-based server matches regularly collected location data with geographic information to determine popular locations;
(2) the location-based server determines in a temporal order visitation numbers of popular locations, respectively;
   in a preferred implementation process, the location-based server performing statistics respectively of the visitation numbers of the popular locations includes: the location-based server determining whether duration of a mobile terminal in a popular location is longer than a threshold corresponding to a type of the popular location; if yes, the location-based server adding 1 to the visitation number of the popular location; and
(3) the location-based server obtains the navigation information based on the statistics of the popular locations and the visitation numbers thereof

Next, this embodiment will be described in detail in conjunction with an example.

In a specific implementing embodiment, when the GPS module of the mobile terminal is in a serving state, positioning requests are sent continuously to the positioning server at a certain time interval, and the positioning server feeds back the positioning results obtained upon operation to the mobile terminal. The mobile terminal processes the positioning results returned and performs statistics of the data such as longitudinal and latitude coordinates obtained upon processing. The mobile terminal maps a statistics result 1 to an electronic map stored in the LBS resource data module of the mobile terminal, determines the mapping results regularly according to a certain condition, and issues a final statistics result 2 to the network for facilitating searching of the other mobile communication terminal users.

The mobile terminal above has a GPS module that can position a current location of the mobile terminal via the positioning server, supports a T-Flash card and has a strong processing capability of mapping, performing statistics, analyzing and issuing, searching the positioning results on the mobile terminal.

A working principle of the positioning server above refers to various positioning technologies that may be currently used in the location-based service technical fields such as positioning and navigating to obtain current location information of a mobile terminal.

The time interval above may be set freely by a user, includes but not limited to 5 minutes, 10 minutes, 15 minutes, etc., but should not be shorter than shortest triggering time of all types of location information.

The positioning result above includes but not limited to cellular Cell-ID, longitudinal and latitude coordinate data, etc.

The statistics result 1 above refers to a set of data including positioning results (longitudinal and latitude coordinates) and corresponding time thereof, and the statistics results may be stored in a form of table, as seen specific examples in Table 1.

The mapping above refers to the mobile terminal matching the positioning data with the electronic map and/or thematic map in the LBS resource data module.

The LBS resource data module above refers to storing various types of resource data , such as electronic map and/or thematic map, statistics and analyzing data, and navigation information issued to the network, related to the location information and navigation information, and all the various types of resource data are stored in a T-Flash card.

The electronic map above refers to an electronic map regularly updated by the LBS service provider or network and dedicated to navigation to display various types of location information in which the users are interested, and specifically, such electronic map further may be divided into various types of "thematic maps" according to location information of different types.

A timing threshold of the timing above may be set freely by the user, for instance, 1 hour, 2 hours, 3 hours, 6 hours, etc.

The certain conditions above correspond to different triggering conditions (i.e. thresholds corresponding to types of popular locations) according to the location information of different types.

The statistics result 2 above refers to the mobile terminal determining (i.e. adding 1 to a visitation number of the location meeting a triggering condition) and analyzing the location information that meets the triggering condition to obtain recommendation values or ranking of locations of one popular type to be issued to the network to guide the mobile communication terminal users to obtain more convenient and fairer products and services. Particularly, the analyzing method above may take factors such as age, sex and income of the mobile communication terminal users into consideration.

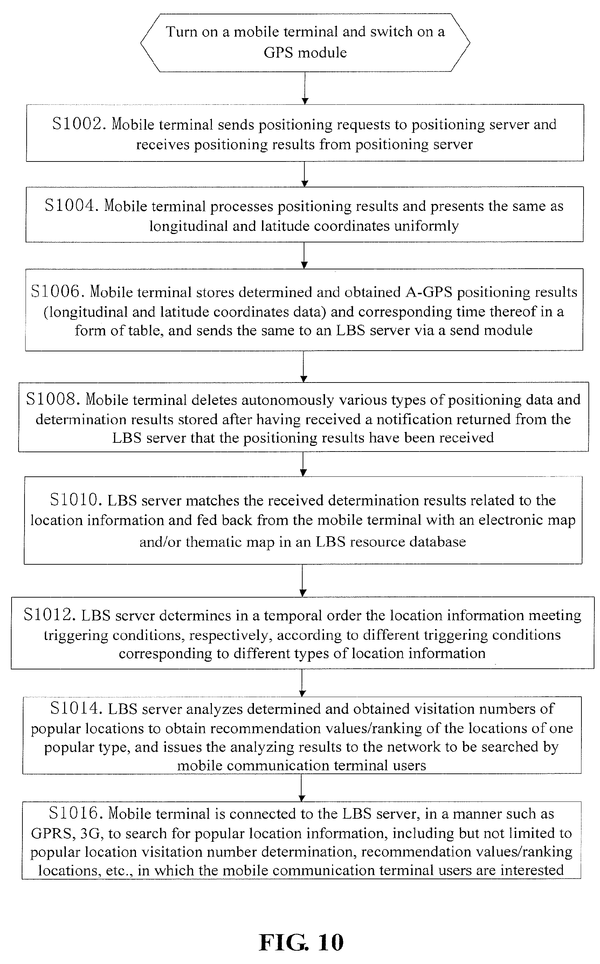

Fig. 10 is a flow chart of a first method for statistics of navigation information according to a preferred embodiment in the present invention. As shown in Fig. 10, a first method for obtaining the navigation information mainly includes the following processes:
step S1002: a GPS switch module 302 controlling to switch on a GPS module 301 that sends positioning requests to a positioning server 100 and receives positioning results fed back from the positioning server 100;
step S1004: an operation module 303 processing the positioning results fed back and presenting the same as longitudinal and latitude coordinates uniformly;
step S1006: a statistics module 304 storing statistics results of positioning (longitudinal and latitude coordinate data) and corresponding time thereof in a form of Table 1, and sending the same to an LBS server 200 via a send module 305;
step S1008: after having received a notification returned from the LBS server 200 that the positioning results have been received, a delete module 307 eliminating autonomously various types of positioning data and statistics results stored on the mobile terminal 300;
step S1010: a mapping module 203 of the LBS server 200 matching the statistics results related to the location information, received by a receiving module 201 and fed back from the mobile terminal 300 with an electronic map and/or thematic map in an LBS resource database 202; and
step S1012: the statistics module 204 performing statistics of location information meeting triggering conditions in a temporal order, respectively, according to different triggering conditions corresponding to different types of location information;

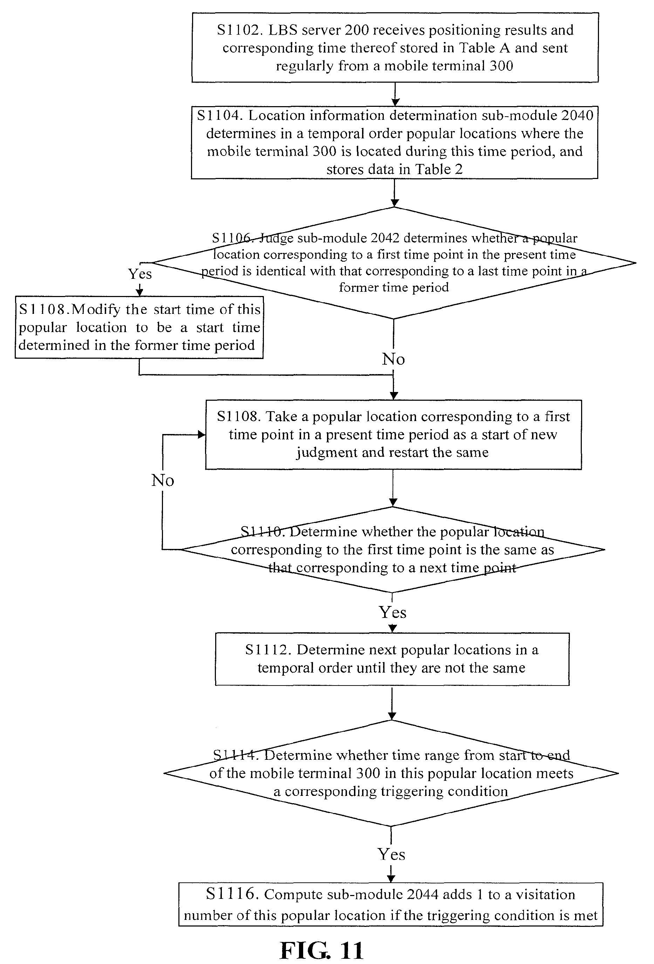

The preferred embodiment as mentioned above will be described in conjunction with Fig. 11. Step S1012 above mainly includes the following processes (step S1102-step S1116):
step S1102: the mobile terminal 300 sending regularly the positioning results and corresponding time thereof in this time period to the LBS server 200;
step S1104: a location information determination sub-module 2040 determining popular locations where the mobile terminal is positioned in this time period, and storing data after determination in a form of Table 2;
step S1106: a judging sub-module 2042 determining whether a popular location corresponding to a first time point is identical with a popular location corresponding to a last time point in a former time period;
step S1108: if yes, modifying a start time of this popular location to be a start time of statistics in the former time period; and if not, taking a popular location corresponding to a first time point in a present time period as a start of a determination, and restarting a new determination;
step S 1110: determining whether the popular location corresponding to the first time point and a popular location corresponding to a next time point are the same popular location; if yes, carrying out step S 1112; otherwise, returning to carry out step S1108, and restarting a new determination according to a location type of a current popular location;
step S 1112: if they are the same popular location, determining following popular locations in turn in a temporal order until they are not the same popular location;
step S1114: determining whether a time range from start to end of the mobile terminal 300 in this popular location meets a corresponding triggering condition; and
step S1116: the statistics sub-module 2044 adding 1 to a visitation number of this popular location if a triggering condition is met.
step S1014: an analyzing module 205 analyzing the obtained statistics of visitation numbers of popular locations to obtain recommendation values/ranking of locations of one popular type, and an issuing module 206 issuing the visitation numbers of locations and recommendation value/ranking of the popular type locations obtained from the statistics and analysis to the network to be searched by the mobile communication terminal users; and
step S1016: connecting a search module 306 to the network, in a manner such as GPRS, 3G, to search for popular location information, including popular location visitation numbers, recommendation values/ranking of the popular type locations, etc., in which the mobile communication terminal users are interested.

With the above embodiment, the mobile terminal sends regularly the location data thereof and time information corresponding to the location data to the LBS server, and the LBS server performs statistics of the location data and corresponding time information thereof to obtain the navigation information. The visitation numbers of the popular locations can be updated in real-time via such a solution, and such statistics methodology is quite fair and reliable, does not have false content, and can provide quite precise navigation information to the mobile communication terminal users.

Secondly, a second embodiment is described.

Preferably, step S904 above may further include the following processes:
(1) the mobile terminal matches in real the collected location data with geographic information to determine popular locations;
(2) the mobile terminal performs statistics of visitation numbers of the popular locations in a temporal order, respectively;
   in a preferred implementation process, the step above may include the following processes: the mobile terminal determining whether duration thereof in a popular location is longer than a threshold corresponding to a type of the popular location; if yes, the mobile terminal adding 1 to the visitation numbers of the popular locations, respectively; and
(3) the mobile terminal reports regularly the popular locations and the visitation numbers thereof to the network service providing platform to enable the network service providing platform to perform statistics of the information reported from respective mobile terminals to obtain the navigation information.

Next, the embodiment will be described in detail in conjunction with an example.

In a specific implementation process, when the GPS module of the mobile terminal is in a serving state, positioning requests are sent continuously to the positioning server at a certain time interval, and the positioning server feeds back the positioning results obtained upon operation to the mobile terminal. The mobile terminal processes the positioning results returned and performs statistics of the data such as longitudinal and latitude coordinates obtained upon processing. The mobile terminal maps a statistics result 1 to an electronic map stored in the LBS resource data module of the mobile terminal, determines regularly the mapping results according to a certain condition, and issues a final statistics result 2 of its own to the network (i.e. network service provider, also possibly called network service providing platform), and the network service provider may collect the statistics results reported from respective mobile terminals so as to facilitate searching by the other mobile communication terminal users.

Particularly, all the concepts such as the mobile terminal, the working principle of the positioning server, the time interval, the positioning result, statistics result 1, and statistics result 2 have been described, and unnecessary details will not be given herein.

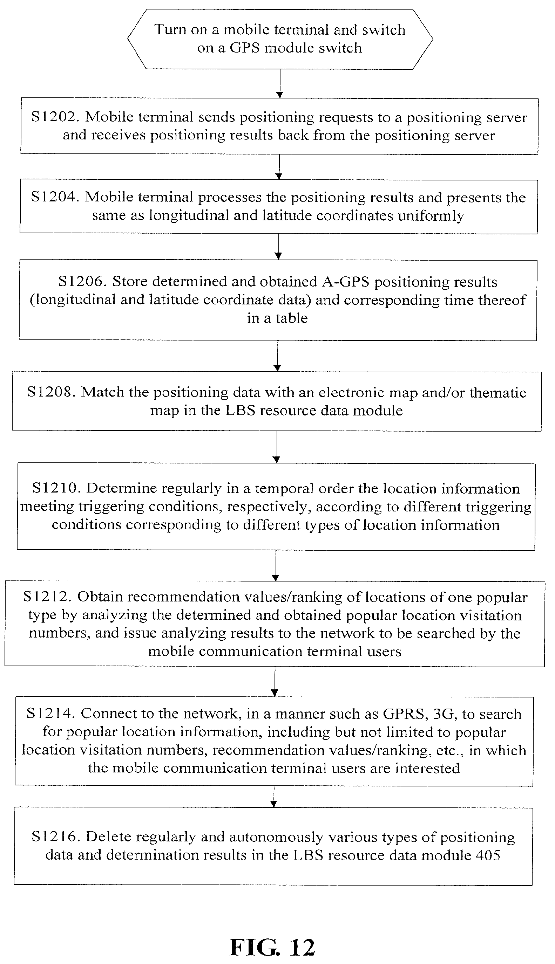

Fig. 12 is a flow chart of a second method for statistics of navigation information according to a preferred embodiment in the present invention. As shown in Fig. 12, a second method for obtaining the navigation information mainly includes:
step S1202: a GPS switching module 402 controlling to switch on a GPS module 401 that sends positioning requests to a positioning server 100 and receiving positioning results fed back from the positioning server 100;
step S1204: an operation module 403 processing the positioning results fed back and presenting the same as longitudinal and latitude coordinates uniformly;
step S1206: a statistics module 404 storing statistics results of positioning (longitudinal and latitude coordinate data) and corresponding time thereof in a form of Table 1;
step S1208: a mapping module 406 matching the positioning data with an electronic map and/or thematic map in the LBS resource data module 405; and
step S1210: a statistics module 407 regularly performing statistics of location information meeting triggering conditions in a temporal order, respectively, according to different triggering conditions corresponding to different types of location information.

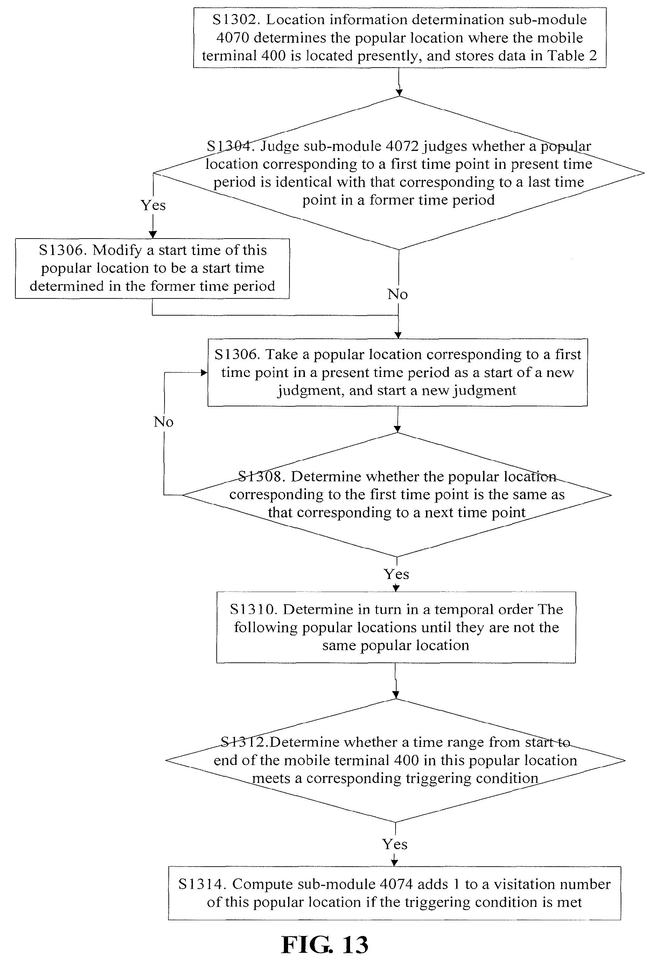

The preferred embodiment as mentioned above will be described in conjunction with Fig. 13. Step S1210 above mainly includes the following processes (step S 13 02-step S 1314):
step S1302: a location information determination sub-module 4070 determining popular locations where the mobile terminal is positiond in this time period, and storing data after determination in a form of Table 2;
step S1304: a judging sub-module 4072 determining whether a popular location corresponding to a first time point in a present time period is identical with a popular location corresponding to a last time point in a former time period;
step S1306: if yes, modifying a start time of this popular location to be a start time determined in the former time period; and if not, taking a popular location corresponding to a first time point in a present time period as a start of a determination, and restarting a new determination;
step S1308: determining whether the popular location corresponding to the first time point and a popular location corresponding to a next time point are the same popular location; if not, restarting a new determination according to a location type of a current popular location;
step S1310: if they are the same popular location, determining following popular locations in turn in a temporal order until they are not the same popular location;
step S 1312: at this time, determining whether a time range from start to end of the mobile terminal 400 in this popular location meets a corresponding triggering condition;
step S 1314: the statistics sub-module 4074 adding 1 to a visitation number of this popular location if a triggering condition is met;
step S1212: an analyze module 408 analyzing the obtained statistics of popular location visitation numbers and an issue module 409 issuing the analyzing result to the network service provider that obtains the navigation information according to the analyzing results provided by respective mobile terminals to be searched by the mobile communication terminal users;
step S1214: connecting a search module 410 to the network, in a manner such as GPRS, 3G, to search for popular location information, comprising but not limited to statistics of popular location visitation number, recommendation values/ranking of the popular type locations, etc., in which the mobile communication terminal users are interested; and
step S1216: a delete module 411 eliminating regularly and autonomously various types of positioning data and statistics results in the LBS resource data module 405.

With the above embodiment, the mobile terminal provides regularly the statistics and analyzing results to the network service provider that obtains the navigation information above according to the data provided by respective mobile terminals. The visitation numbers of the popular locations can be updated in real-time via such a solution. Such statistics methodology is quite fair and reliable, does not have false content, and can provide quite precise navigation information to the mobile communication terminal users.

To sum up, both technical solutions above provided in the present invention can realize real-time updating of the visitation numbers of the popular locations, and such statistics methodologies are quite fair and reliable, do not have false content, and can provide quite precise navigation information to the mobile communication terminal users.

Apparently, the person skilled in the art should know that each of the modules or steps in the present invention can be realized by the general determining apparatus, which can be collected in a single determining apparatus or distributed on the network formed by a plurality of determining apparatus. Optionally, they can be realized by the program codes executable by the determining apparatus, therefore, they can be stored in the storing apparatus to be executed by the determining apparatus, and in some case the steps shown or described may be carried out in an order different from that herein, or they can be realized by fabricating them into integrated circuit modules, respectively, or a plurality of modules or steps therein are fabricated into individual integrated circuit module for accomplishment. Thus, the present invention is not limited to the combination of any particular hardware and software.

The above mentioned is merely the preferred embodiments of the present invention but not to limit the present invention. Various alterations and changes to the present invention are apparent to the person skilled in the art. Any modifications, equivalent substitutions, improvements etc. within the spirit and principle of the present invention should be concluded in the scope protected by the present invention.

## Claims

1. A mobile terminal module (60), configured to determine popular locations corresponding to location data thereof and visitation numbers of the popular locations, and to report regularly the determined popular locations and visitation numbers thereof to a network service providing module, **characterized by** comprising:
a mapping module (406) configured to match in real-time collected location data with geographic information to determine the popular locations;
a statistics module (407) configured to perform statistics of visitation numbers of the popular locations in a temporal order, respectively;
an analyze module (408) configured to analyze the visitation numbers of the popular locations and obtain navigation information; and
an issue module (409) configured to issue navigation information to the network to be searched by the mobile communication terminal users.

2. The mobile terminal module (60) according to Claim 1, **characterized in that** the mobile terminal module comprises:
a GPS module (401) configured to send regularly positioning requests to a position service module (64) and to receive positioning results returned from the position service module; and
a GPS switching module (402) configured to control on and off of the GPS module (401).

3. The mobile terminal module (60) according to Claim 1, **characterized in that** the mobile terminal module (60) comprises:
a location-based service resource data module (405) configured to store the location data and corresponding time information thereof; and
a delete module (307) configured to delete the location data and corresponding time information thereof regularly.

4. A system for statistics of navigation information, **characterized by** comprising:
a mobile terminal module (60) configured to determine popular locations corresponding to location data thereof and visitation numbers of the popular locations, and to report regularly the determined popular locations and visitation numbers thereof to a network service providing module;
the network service providing module (62) configured to perform statistics of information of the popular locations and visitation numbers thereof reported from the mobile terminal module to obtain the navigation information;
a position service module (64) configured to receive regularly positioning requests from the mobile terminal module to position the mobile terminal module, and to send positioning results obtained upon operation to the mobile terminal module; and
the mobile terminal module (60) being further configured to process the positioning results to obtain the location data,
wherein the mobile terminal module (60) comprises:
a mapping module (406) configured to match in real-time collected location data with geographic information to determine the popular locations;
a statistics module (407) configured to perform statistics of visitation numbers of the popular locations in a temporal order, respectively;
an analyze module (408) configured to analyze the visitation numbers of the popular locations and obtain navigation information; and
an issue module (409) configured to issue navigation information to the network to be searched by the mobile communication terminal users.

5. The system according to Claim 4, **characterized in that** the mobile terminal module (400) comprises:
a GPS module (401) configured to send regularly positioning requests to a position service module and to receive positioning results returned from the position service module; and
a GPS switching module (402) configured to control on and off of the GPS module.

6. The system according to Claim 4, **characterized in that** the mobile terminal module (400) comprises:
a location-based service resource data module (405) configured to store the location data and corresponding time information thereof; and
a delete module (411) configured to delete regularly the location data and corresponding time information thereof.

7. A method for statistics of navigation information, **characterized by** comprising:
performing following process in a mobile terminal module: determining popular locations corresponding to the location data thereof and visitation numbers of the popular locations, and reporting regularly the determined popular locations and visitation numbers thereof to a network service providing module; and
performing following process in a network service providing module: performing statistics of information of the popular locations and visitation numbers thereof reported from the mobile terminal module to obtain the navigation information, wherein
the determining and reporting process in the mobile terminal module comprise following steps:
matching in real-time collected location data with geographic information to determine the popular locations;
performing statistics of visitation numbers of the popular locations in a temporal order, respectively;
analyzing the visitation numbers of the popular locations and obtain navigation information; and
issuing navigation information to the network to be searched by the mobile communication terminal users.

8. The method according to Claim 7, **characterized in that** the steps operated in the mobile terminal further comprise:
sending regularly positioning requests to a position service module and receiving positioning results returned from the position service module; and
processing the received positioning results and presenting the same as longitudinal and latitude coordinates uniformly.

9. The method according to Claim 7, **characterized in that** steps operated in the mobile terminal further comprise:
storing statistics results of positioning and corresponding time thereof in a form of a table wherein the results of positioning are in a form of longitudinal and latitude coordinate data respectively.

10. The method according to Claim 9, **characterized in that** the steps operated in the mobile terminal further comprise:
analyzing the obtained statistics of popular location visitation numbers and issuing the analyzing result to the network service provider that obtains the navigation information according to the analyzing results provided by respective mobile terminals to be searched by the mobile communication terminal users.

11. The method according to Claim 7, **characterized in that** the steps operated in the mobile terminal further comprise:
regularly performing statistics of location information meeting triggering conditions in a temporal order, respectively, according to different triggering conditions corresponding to different types of location information.

12. The method according to Claim 11, **characterized in that** the step of regularly performing statistics of location information further comprises:
determining whether a popular location corresponding to a first time point in a present time period is identical with a popular location corresponding to a last time point in a former time period;
if yes, modifying a start time of this popular location to be a start time determined in the former time period; and if not, taking a popular location corresponding to a first time point in a present time period as a start of a determination, and restarting a new determination.

13. The method according to Claim 12, **characterized in that** the step of regularly performing statistics of location information further comprises:
determining whether the popular location corresponding to the first time point and a popular location corresponding to a next time point are the same popular location;
if not, restarting a new determination according to a location type of a current popular location; if they are the same popular location, determining following popular locations in turn in a temporal order until they are not the same popular location.

## Patentansprüche

1. Modul (60) für mobiles Endgerät, das konfiguriert ist, beliebte Orte entsprechend ihren Ortsdaten und Besuchszahlen der beliebten Orte zu bestimmen und einem Netzdienstbereitstellungsmodul regelmäßig die bestimmten beliebten Orte und ihre Besuchszahlen zu melden, **gekennzeichnet durch**:
ein Abbildungsmodul (406), das konfiguriert ist, in Echtzeit gesammelte Ortsdaten an geographische Informationen anzupassen, um die beliebten Orte zu bestimmen;
ein Statistikmodul (407), das konfiguriert ist, die Statistik der Besuchszahlen der beliebten Orte jeweils in einer zeitlichen Reihenfolge durchzuführen;
eine Analysemodul (408), das konfiguriert ist, die Besuchszahlen der beliebten Orte zu analysieren und Navigationsinformationen zu gewinnen; und
ein Ausgabemodul (409), das konfiguriert ist, Navigationsinformationen an das Netz auszugeben, damit sie von den Anwendern des Mobilfunkendgeräts abgefragt werden können.

2. Modul (60) für mobiles Endgerät nach Anspruch 1, **dadurch gekennzeichnet, dass** das Modul für mobiles Endgerät Folgendes umfasst:
ein GPS-Modul (401), das konfiguriert ist, regelmäßig Positionierungsanfragen an ein Positionsdienstmodul (64) zu senden und Positionierungsergebnisse, die von dem Positionsdienstmodul zurückgegeben werden, zu empfangen; und
ein GPS-Schaltmodul (402), das konfiguriert ist, Ein- und Ausschalten des GPS-Moduls (401) zu steuern.

3. Modul (60) für mobiles Endgerät nach Anspruch 1, **dadurch gekennzeichnet, dass** das Modul für mobiles Endgerät (60) Folgendes umfasst:
ein ortsbasiertes Dienstbetriebsmitteldatenmodul (405), das konfiguriert ist, die Ortsdaten und deren entsprechende Zeitinformationen zu speichern; und
ein Löschmodul (307), das konfiguriert ist, die Ortsdaten und deren zugehörige Zeitinformationen regelmäßig zu löschen.

4. System für die Statistik von Navigationsinformationen, **gekennzeichnet durch**:
ein Modul (60) für mobiles Endgerät, das konfiguriert ist, beliebte Orte entsprechend ihren Ortsdaten und Besuchszahlen der beliebten Orte zu bestimmen, und einem Netzdienstbereitstellungsmodul regelmäßig die bestimmten beliebten Orte und deren Besuchszahlen zu melden;
wobei das Netzdienstbereitstellungsmodul (62) konfiguriert ist, die Statistik der Informationen über die beliebten Orte und ihrer Besuchszahlen, die von dem mobilen Endgerätemodul gemeldet werden, durchzuführen, um die Navigationsinformationen zu gewinnen;
ein Positionsdienstmodul (64), das konfiguriert ist, regelmäßig Positionierungsanfragen von dem mobilen Endgerätemodul zu empfangen, um das mobile Endgerät zu positionieren, und die Positionierungsergebnisse, die bei Betrieb des mobilen Endgerätemoduls gewonnen werden, zu senden; und
wobei das Modul für mobiles Endgerät (60) ferner konfiguriert ist, die Positionierungsergebnisse zu verarbeiten, um die Ortsdaten zu erhalten,
wobei das Modul für mobiles Endgerät (60) Folgendes umfasst:
ein Abbildungsmodul (406), das konfiguriert ist, in Echtzeit gesammelte Ortsdaten an geographische Informationen anzupassen, um die beliebten Orte zu bestimmen;
ein Statistikmodul (407), das konfiguriert ist, die Statistik der Besuchszahlen der beliebten Orte jeweils in einer zeitlichen Reihenfolge durchzuführen;
eine Analysemodul (408), das konfiguriert ist, die Besuchszahlen der beliebten Orte zu analysieren und Navigationsinformationen zu gewinnen; und
ein Ausgabemodul (409), das konfiguriert ist, Navigationsinformationen an das Netz auszugeben, damit sie von den Anwendern des Mobilfunkendgeräts abgefragt werden können.

5. System nach Anspruch 4, **dadurch gekennzeichnet, dass** das Modul für mobiles Endgerät (400) Folgendes umfasst:
ein GPS-Modul (401), das konfiguriert ist, regelmäßig Positionierungsanfragen an ein Positionsdienstmodul zu senden und Positionierungsergebnisse, die von dem Positionsdienstmodul zurückgegeben werden, zu empfangen; und
ein GPS-Schaltmodul (402), das konfiguriert ist, das Ein- und Ausschalten des GPS-Moduls zu steuern.

6. System nach Anspruch 4, **dadurch gekennzeichnet, dass** das Modul für mobiles Endgerät (400) Folgendes umfasst:
ein ortsbasiertes Dienstbetriebsmitteldatenmodul (405), das konfiguriert ist, die Ortsdaten und deren zugehörige Zeitinformationen zu speichern; und
ein Löschmodul (411), das konfiguriert ist, die Ortsdaten und deren zugehörige Zeitinformationen regelmäßig zu löschen.

7. Verfahren für die Statistik von Navigationsinformationen, **gekennzeichnet durch**:
Ausführen des folgenden Vorgangs in einem mobilen Endgerätemodul: Bestimmen von beliebten Orten entsprechend ihrer Ortsdaten und von Besuchszahlen der beliebten Orte, und regelmäßiges Melden der bestimmten beliebten Orte und deren Besuchszahlen an ein Netzdienstbereitstellungsmodul; und
Ausführen des folgenden Vorgangs in einem Netzdienstbereitstellungsmodul: Ausführen der Statistik von Informationen der beliebten Orte und deren Besuchszahlen, die von dem mobilen Endgerät gemeldet werden, um die Navigationsinformationen zu erhalten, wobei
der Vorgang des Bestimmens und des Meldens in dem mobilen Endgerätemodul die folgenden Schritte umfasst:
Anpassen von in Echtzeit gesammelten Ortsdaten an geographische Informationen, um die beliebten Orte zu bestimmen;
Ausführen der Statistik der Besuchszahlen der beliebten Orte jeweils in einer zeitlichen Reihenfolge;
Analysieren der Besuchszahlen der beliebten Orte und Gewinnen von Navigationsinformationen; und
Ausgeben von Navigationsinformationen an das Netz, damit sie von den Anwendern des Mobilfunkendgeräts abgefragt werden können.

8. Verfahren nach Anspruch 7, **dadurch gekennzeichnet, dass** die Schritte, die in dem mobilen Endgerät ausgeführt werden, ferner Folgendes umfassen:
regelmäßiges Senden von Positionierungsanfragen an ein Positionsdienstmodul und Empfangen von Positionierungsergebnissen, die von dem Positionsdienstmodul zurückgegeben werden; und
Verarbeiten der empfangenen Positionierungsergebnisse und gleichförmiges Darstellen dieser als Längs- und Breitengradkoordinaten.

9. Verfahren nach Anspruch 7, **dadurch gekennzeichnet, dass** die in dem mobilen Endgerät betriebenen Schritte ferner Folgendes umfassen:
Speichern der Statistikergebnisse der Positionierung und deren zugehöriger Zeit in Form einer Tabelle, wobei die Ergebnisse der Positionierung jeweils in Form von Längs- und Breitengradkoordinatendaten sind.

10. Verfahren nach Anspruch 9, **dadurch gekennzeichnet, dass** die in dem mobilen Endgerät betriebenen Schritte, ferner Folgendes umfassen:
Analysieren der gewonnenen Statistik der Besuchszahlen der beliebten Orte und Ausgeben des Ergebnisses der Analyse an den Netzdienstanbieter, der die Navigationsinformationen entsprechend den Ergebnissen der Analyse, die von den jeweiligen mobilen Endgeräten bereitgestellt werden, gewinnt, damit sie von den Anwendern der mobilen Endgeräte abgerufen werden können.

11. Verfahren nach Anspruch 7, **dadurch gekennzeichnet, dass** die in dem mobilen Endgerät betriebenen Schritte ferner Folgendes umfassen:
regelmäßiges Ausführen der Statistik von Ortsinformationen, die Auslösebedingungen jeweils in einer zeitlichen Reihenfolge, entsprechend den unterschiedlichen Auslösebedingungen, die verschiedenen Typen von Ortsinformationen entsprechen, erfüllen.

12. Verfahren nach Anspruch 11, **dadurch gekennzeichnet, dass** der Schritt des regelmäßigen Ausführens der Statistik von Ortinformationen ferner Folgendes umfasst:
Bestimmen, ob ein beliebter Ort, der einem ersten Zeitpunkt in einem aktuellen Zeitraum entspricht, identisch mit einem beliebten Ort ist, der einem letzten Zeitpunkt in einem vorherigen Zeitraum entspricht;
falls dies zutrifft, Modifizieren einer Anfangszeit dieses beliebten Ortes, so dass sie einer Anfangszeit entspricht, die in dem vorherigen Zeitraum bestimmt worden ist; und falls dies nicht zutrifft, Übernehmen eines beliebten Ortes, der einem ersten Zeitpunkt in einem aktuellen Zeitraum entspricht, als einen Anfangswert der Bestimmung, und Neustarten einer neuen Bestimmung.

13. Verfahren nach Anspruch 12, **dadurch gekennzeichnet, dass** der Schritt des regelmäßigen Ausführens der Statistik von Ortsinformationen ferner Folgendes umfasst:
Bestimmen, ob der beliebte Ort, der dem ersten Zeitpunkt entspricht, und ein beliebter Ort, der einem folgenden Zeitpunkt entspricht, demselben beliebten Ort entsprechen;
falls dies nicht zutrifft, Neustarten einer neuen Bestimmung gemäß einem Ortstyp eines aktuellen beliebten Orts; falls sie demselben beliebten Ort entsprechen, wiederum Bestimmen der folgenden beliebten Orte in einer zeitlichen Reihenfolge, bis sie nicht mehr demselben beliebten Ort entsprechen.

## Revendications

1. Module terminal mobile (60), configuré pour déterminer des emplacements populaires correspondant à des données d'emplacement associées et des nombres de visites des emplacements populaires, et transmettre régulièrement les emplacements populaires et les nombres de visites associés à un module de fourniture de services réseau, **caractérisé en ce qu'**il comprend :
un module de mappage (406) configuré pour apparier en temps réel des données d'emplacement collectées avec des informations géographiques pour déterminer les emplacements populaires ;
un module de statistiques (407) configuré pour exécuter des statistiques de nombres de visites des emplacements populaires dans un ordre temporel, respectivement ;
un module d'analyse (408) configuré pour analyser les nombres de visites des emplacements populaires et obtenir des informations de navigation ; et
un module d'émission (409) configuré pour envoyer des informations de navigation au réseau faisant l'objet de la recherche par les utilisateurs du terminal de communication mobile.

2. Module terminal mobile (60) selon la revendication 1, **caractérisé en ce que** le module terminal mobile comprend :
un module GPS (401) configuré pour envoyer régulièrement des requêtes de positionnement à un module de service de position (64) et pour recevoir des résultats de positionnement retournés à partir du module de service de position ; et
un module de commutation GPS (402) configuré pour mettre le module GPS (401) sous tension et hors tension.

3. Module terminal mobile (60) selon la revendication 1, **caractérisé en ce que** le module terminal mobile (60) comprend :
un module de données de ressources de service basé sur un emplacement (405) configuré pour stocker les données d'emplacement et des informations de temps correspondantes ; et
un module de suppression (307) configuré pour supprimer régulièrement les données d'emplacement et des informations de temps correspondantes.

4. Système pour des statistiques d'informations de navigation, **caractérisé en ce qu'**il comprend :
un module terminal mobile (60) configuré pour déterminer des emplacements populaires correspondant à des données d'emplacement associées et des nombres de visites des emplacements populaires, et transmettre régulièrement les emplacements populaires et les nombres de visites associés déterminés à un module de fourniture de services réseau ;
le module de fourniture de services réseau (62) configuré pour exécuter des statistiques d'informations des emplacements populaires et des nombres de visites associés transmises à partir du module terminal mobile pour obtenir les informations de navigation ;
un module de service de position (64) configuré pour recevoir régulièrement des requêtes de positionnement à partir du module terminal mobile pour positionner le module terminal mobile, et pour envoyer des résultats de positionnement obtenus en mode de fonctionnement au module terminal mobile ; et
le module terminal mobile (60) étant en outre configuré pour traiter les résultats de positionnement afin d'obtenir les données d'emplacement,
le module terminal mobile (60) comportant :
un module de mappage (406) configuré pour apparier en temps réel des données d'emplacement collectées avec des informations géographiques pour déterminer les emplacements populaires ;
un module de statistiques (407) configuré pour exécuter des statistiques de nombres de visites des emplacements populaires dans un ordre temporel, respectivement ;
un module d'analyse (408) configuré pour analyser les nombres de visites des emplacements populaires et obtenir des informations de navigation ; et
un module d'émission (409) configuré pour envoyer des informations de navigation au réseau faisant l'objet de la recherche par les utilisateurs du terminal de communication mobile.

5. Système selon la revendication 4, **caractérisé en ce que** le module terminal mobile (400) comprend :
un module GPS (401) configuré pour envoyer régulièrement des requêtes de positionnement à un module de service de position et pour recevoir des résultats de positionnement retournés à partir du module de service de position ; et
un module de commutation GPS (402) configuré pour mettre sous tension et hors tension le module GPS.

6. Système selon la revendication 4, **caractérisé en ce que** le module terminal mobile (400) comprend :
un module de données de ressources de service basé sur un emplacement (405) configuré pour stocker les données d'emplacement et des informations de temps correspondantes ; et
un module de suppression (411) configuré pour supprimer régulièrement les données d'emplacement et des informations de temps correspondantes.

7. Procédé pour des statistiques d'informations de navigation, **caractérisé en ce qu'**il comprend :
exécuter le processus suivant dans un module terminal mobile : déterminer des emplacements populaires correspondant aux données d'emplacement associées et des nombres de visites des emplacements populaires, et transmettre régulièrement les emplacements populaires et les nombres de visites associés à un module de fourniture de services réseau ; et
exécuter le processus suivant dans un module de fourniture de services réseau : exécuter des statistiques d'informations des emplacements populaires et des nombres de visites associés transmises à partir du module terminal mobile pour obtenir les informations de navigation,
le processus de détermination et de transmission dans le module terminal mobile comprend les étapes suivantes :
apparier en temps réel des données d'emplacement collectées avec des informations géographiques pour déterminer les emplacements populaires ;
exécuter des statistiques de nombres de visites des emplacements populaires dans un ordre temporel, respectivement ;
analyser les nombres de visites des emplacements populaires et obtenir des informations de navigation ; et
envoyer des informations de navigation au réseau faisant l'objet de la recherche par les utilisateurs du terminal de communication mobile.

8. Procédé selon la revendication 7, **caractérisé en ce que** les étapes exécutées dans le terminal mobile comprennent en outre :
envoyer régulièrement des requêtes de positionnement à un module de service de position et recevoir des résultats de positionnement retournés à partir du module de service de position ; et
traiter les résultats de positionnement reçus et les présenter uniformément comme des coordonnées longitudinales et de latitude.

9. Procédé selon la revendication 7, **caractérisé en ce que** les étapes exécutées dans le terminal mobile comprennent en outre :
stocker des résultats statistiques de positionnement et un temps correspondant sous la forme d'une table, les résultats de positionnement étant sous une forme de données de coordonnées longitudinales et de latitude respectivement.

10. Procédé selon la revendication 9, **caractérisé en ce que** les étapes exécutées dans le terminal mobile comprennent en outre :
analyser les statistiques obtenues de nombres de visites d'emplacements populaires et envoyer le résultat d'analyser au fournisseur de services réseau qui obtient les informations de navigation selon les résultats d'analyse fournis par des terminaux mobiles respectifs faisant l'objet de la recherche par les utilisateurs du terminal de communication mobile.

11. Procédé selon la revendication 7, **caractérisé en ce que** les étapes exécutées dans le terminal mobile comprennent en outre :
exécuter régulièrement des statistiques d'informations d'emplacement répondant à des conditions de déclenchement dans un ordre temporel, respectivement, selon des conditions de déclenchement différentes correspondant à différents types d'informations d'emplacement.

12. Procédé selon la revendication 11, **caractérisé en ce que** l'étape consistant à exécuter régulièrement des statistiques d'informations d'emplacement comprend en outre :
déterminer si un emplacement populaire correspondant à un premier point temporel dans une période de temps présente est identique à un emplacement populaire correspondant à un dernier point temporel dans une période de temps précédente ;
si tel est le cas, modifier un temps de début de cet emplacement populaire pour qu'il soit un temps de début déterminé dans la période de temps précédente ; et si tel n'est pas le cas, prendre un emplacement populaire correspondant à un premier point temporel dans une période de temps présente comme un début d'une détermination, et recommencer une nouvelle détermination.

13. Procédé selon la revendication 12, **caractérisé en ce que** l'étape consistant à exécuter régulièrement des statistiques d'informations d'emplacement comprend en outre :
déterminer si l'emplacement populaire correspondant au premier point temporel et un emplacement populaire correspondant à un point temporel suivant sont les mêmes emplacements populaires ;
si tel n'est pas le cas, recommencer une nouvelle détermination selon un type d'emplacement d'un emplacement populaire courant ; si ce sont les mêmes emplacements populaires, déterminer de même des emplacements populaires suivants dans un ordre temporel jusqu'à ce que les emplacements populaires ne soient plus les mêmes.
